# EUROPEAN PATENT SPECIFICATION

(11) **EP 1 001 881 B1**
(45) Date of publication and mention of the grant of the patent: **29.01.2003**
(21) Application number: 98936274.4
(22) Date of filing: 06.08.1998
(51) Int. Cl.: B32B 27/12, B32B 31/08, B29C 65/44

(54) **METHOD OF MANUFACTURING A COMPOSITE MATERIAL**
VERFAHREN ZUR HERSTELLUNG EINES VERBUNDMATERIALS
PROCEDE DE FABRICATION D'UN MATERIAU COMPOSITE

(30) Priority: 06.08.1997 DK 91097
(43) Date of publication of application: 24.05.2000
(73) Proprietor: KE-BURGMANN A/S, DK-6600 Vejen (DK)
(72) Inventor: MATHIESEN, Benny, Martin, DK-5500 Middelfart (DK)
(74) Representative: Elmeros, Claus
(86) International application number: PCT/DK98/00342
(87) International publication number: WO 99/007551

(56) References cited:
- EP-A- 0 159 942
- EP-A- 0 711 657
- WO-A-90/08651
- WO-A-92/09429
- GB-A- 1 451 824

## Description

### Background art

The invention relates to a method of manufacture of a composite material according to the introductory part of claim 1, a composite product according to the introductory part of claim 8 and an apparatus for performing the method according to the introductory part of claim 10.

Composite products comprising a reinforcing woven material and a polytetrafluorethylene (PTFE) foil are used for many different industrial purposes. Within the chemical industry, this kind of material is for example used for vessels, compensators, containers, conveyor belts and chemical barriers in general that must be able to resist strong chemical and thermal impacts. This is likewise the case within power plants, the food industry and many other- applications where reliable and strong mechanical and/or chemical properties are also important.

In a composite material of the above kind the interaction between materials in the composite will create the properties that makes the composite material suitable for a given application. Typically, the woven material will improve the mechanical properties during a thermal impact whilst the applied PTFE foil or foils will constitute barrier properties that can be maintained even under high temperatures.

However, it has proven difficult to obtain a proper "balance" between the individual components of the composite material during its manufacture. This is because a composite product typically shrinks relatively much during the manufacturing, so that the final end composite product displays significantly different dimensions than those of the original laminated product. This is in particular a problem in relation to the manufacture of composite products with pre-determined end dimensions, just as there is a tendency for the composite product co bend or wrinkle particularly in the edge regions.

Apart from the problem in itself that the composite shrinks or in other ways are disfigured, it is also a problem that it can be difficult to predict which dimensions the end product actually obtains. This results often in that the composite product, where it is possible, must be machined further after the lamination. This further treatment such as machining results in material waste just as it most often is not possible to carry out the further treatment of a product in an automated manner.

Furthermore, it must be mentioned that the material waste as a result of the shrinkage of the material in itself is so high that it is a significant factor in the final production price. An laminated assembly to composite produce of the above kind can shrink with more than 10 %.

A way of improving the manufacturing process is by adding to the woven material an extra layer of coating on the opposite side of the provided lamination of PTFE foils.

This solution however makes the manufacturing process more expensive in itself, results in an increased use of material, and finally results in that the finished composite materials are increased in thickness and weight.

Other processes for manufacturing composite products by laminating are known from e.g. WO-A-92/09429, EP-A-0 711 657, EP-A-0 159 942 and GB-A-1 451 824.

GB 1 451 824 describes a method of cavity-free manufacturing of laminates. The semi-finished product is produced from fibre-reinforced material and a textile web material under pressure at a temperature of 150-300° C. The fibre reinforced materials described are not sufficiently resistant to strong chemical and thermal impacts.

### Disclosure for the invention

The present invention provides a method of manufacture of a composite product comprising at least two different layers being at least one layer of reinforced woven material and at least one layer of PTFE foil or ePTFE foil, where the foil or foils are laminated together with the layer or layers of woven material under the use of heating and pressurising,
characterised in that the composite material subsequently is cooled in a fully or partly fixed state and where the cooling is carried out over a period of time of 0.1 to 240 seconds from a temperature of 300 to 420 °C, preferably 20 to 120 seconds from a temperature of 380 to 400 °C, to a temperature of 50 °C.

By, as disclosed in claim 1, to cool the composite material subsequently in a fully or partly fixed state, a composite material with an improved form stability, reduced shrinkage and an enhanced elastic modulus (E-module) is obtained.

By reducing the shrinkage for the PTFE of the composite, a better form stability for the product as a whole is hereby obtained, since the woven material typically is very sensitive to shrinkage by lamination with a foil.

The main purpose, that is to obtain an improved form stability, is thus a very important factor in connection to a precision produce of composite products, conduit linings, compensators, conveyor belts, tank liners, containers or similar applications, where a poor form stability results in that the finished product shrinks with a relative large and not fully determined percentage.

This is also the case where the composite materials, in for instance chemical plants, is combined with form stabile components with known dimensions, since it can be tremendously difficult to predict the dimensions of the finished composite product.

A fixation of the composite could be an example be carried out by expanding the composite in a frame, and then carry out a cooling by the use of a gas or a liquid.

By the invention it is preferred to let the cooling take place as quickly as possible after the heating.

By a reinforcing woven material is understood for instance glass fibre fabric, PTFE fabric, PTFE coated glass fibre fabric or other materials. However it is preferred in many applications to use glass fibre fabric. By a ePTFE foil is meant an expanded PTFE foil.

According to the invention, by fixation in full or partly of the composite during the cooling, it is further possible to regulate or control the shrinkage of the finished product. This is of major importance in relation to products where high dimensional requirements are requested of the end product. A part of the cooling process can for instance be carried out in a fixed state, whilst another part of the cooling process can be carried out in a non-fixed state.

It is understood that the invention can be carried out as a sub-process of a total process, since it is possible to manufacture a composite material with one added layer of foil and fabric at the time, so that a multi-layered composite material can be manufactured by laminating one layer to the composite at the time.

Besides there is achieved the significant advantage that the finished composite material according to the invention in itself exhibits a significantly reduced shrinkage of the end product relative to the added foils and fabrics, which means that the utilisation degree can be enhanced by at least 10 %.

Moreover, a major trimming of the edge regions can be avoided, whereby the waste of material in this relation is reduced.

The cooling is carried out over a period of time of 0.1 to 240 seconds from a temperature of 300 to 420 °C to a temperature of 50 °C, an advantageous and practical embodiment of the invention is achieved.

It is preferred for many of the used material thickness that the time period is 20 to 120 seconds from a temperature of 380 to 400 °C to a temperature of 50 °C.

It is understood that the time and cooling process is very dependent on the thickness and the properties of the individual components.

It should be emphasised that the cooling can be done rather quickly, whereby the combined cooling and fixation is vary attractive in connection with automatic and continuous manufacturing processes.

It is further understood that improved results can be achieved by performing a cooling according to the invention over a part of a temperature interval, just as it is understood that the best result, however, first will be achieved when cooling over the whole temperature interval, i.e. from a given high temperature to a wanted end temperature.

By, as described in claim 2, to let the composite material be subject to a tension during the cooling, an advantageous embodiment of the invention is achieved.

By, as described in claim 3, that the composite material undergoes a combined cooling and pressure operation by means for pressure application, an advantageous embodiment of the invention is achieved, since the means for pressure supply fixates the composite material during the cooling, which results in a solid improvement of the form stability. Specifically, a particularly high E-module can be achieved for the final composite product, just as a good form stability is achievable. This means for instance that the shrinkage of a composite material manufactured according to the invention will be significantly reduced. By certain types of products the shrinkage can be reduced with a factor 10-15 and the E-module can be enhanced by a factor 5.

The achieved fixation by means for pressure supply also means that the composite can be cooled during a very high pressure, as the composite hereby is fixated in a controlled manner during the entire cooling. This high cooling pressure results firstly in that the form of-the composite is maintained during the cooling in its final shape, and secondly that the cooling takes place much more quickly across the surface. An improved contact between the means for pressure supply and the composite thus leads to an improved mutual heat transport, whereby the cooling of the composite can be accelerated.

By, as described in claim 4, that the means for pressure supply is provided with cooling means, a particularly advantageous embodiment of the invention is achieved, since it has been discovered that this combined cooling and pressure application results in an optimal result with respect to the produced composite materials. Firstly, a product with improved shrinkage properties is achieved, secondly, the product can be produced with a relative uncomplicated control.

As mentioned above, an improved contact between the means for pressure supply and the composite thus results in an improved mutual heat transfer whereby the cooling of the composite can be accelerated.

By, as described in claim 5, that the pressure supply is provided continuously by means for pressure supply comprising at least one roller, there is established a commercially advantageous possibility of providing a continuous production of a form stabile composite material and/or a high E-module.

The production can further be carried out in a relative high speed.

By, as described in claim 6, that the pressure supply is provided intermittently by means for pressure supply comprising a pressure surface, there is achieved a particular advantageous embodiment of the invention, as the pressure supply applied by a pressure plate can be completely, controlled in the sense that any supplementary tension in the foils or the surface direction of the composite in many applications can be totally avoided.

The pressure supply can be provided by controlling only one parameter, i.e. the pressure provided by the means for pressure supply. By using this pressure surface it is avoided that the diffusion properties are influenced uncontrollably by simultaneous tension in the foils or the composite.

As a pressure surface is in this connection for instance understood a plate, just as'a pressure surface can-be in the shape of a form.

It is preferred according to the invention to use a relative high surface pressure, since the fixation thereby becomes better during the cooling. As an example a pressure of 0.1 - 20 N/mm² can be used.

A high surface pressure on the composite material during the cooling will result in improved material properties both with respect to the form stability and performance, just as shrinkage in the flow direction in the continuous process is reduced, as the composite due to the use of a pressure plate also is held in its longitudinal direction during the cooling.

By, as described in claim 7, that the composite material is cooled under a substantively uniform pressure over the surface by a cooling surface, a possibility is achieved to obtain a composite material having uniform shrinkage properties over the entire surface.

By as described in ciaim 8, that the product comprises at least two different layers being at least one foil layer of PTFE or ePTFE foil and at least one layer of reinforcing woven material, a product is achieved possessing a high E-module and other advantageous material properties.

A further advantage by a composite product of the above mentioned kind is that the edge properties become improved considerably, as a reduced shrinkage of in particular materials that consist of for instance a layer of PTFE foil laminated without the use of the teaching. according to the invention would have a tendency to curl or "wrinkle" in the edges of the composite product. This disadvantage is partly equalised by the improvement of the shrinkage properties, that is less shrinkage, just as the fixation of the composite during the cooling improves the resulting form stability overall in the product - and thereby also in the edge sections.

By, as described in claim 9, that the reinforcing woven material consists at least partly of glass fibre fabric or PTFE coated glass fibre fabric, a particular advantageous embodiment of the invention is achieved. The invention has proven itself particular advantageous with respect to the relative high sensibility compared with a laminated PTFE foil. It has proven possible to produce composite products, e.g. discrete components, endless webs of the composite etc., without that the dimensions of the final products divert substantively from the original form of the composite in its non-final state. Under all circumstances it is possible according to the invention to obtain a larger degree of predictability with respect to the shrinkage.

### The drawings

In the following, the invention is further described under reference to the drawings, where
fig. 1 shows a preferred embodiment of the invention, and where
fig. 2 shows a further embodiment of the invention.

### Preferred embodiment

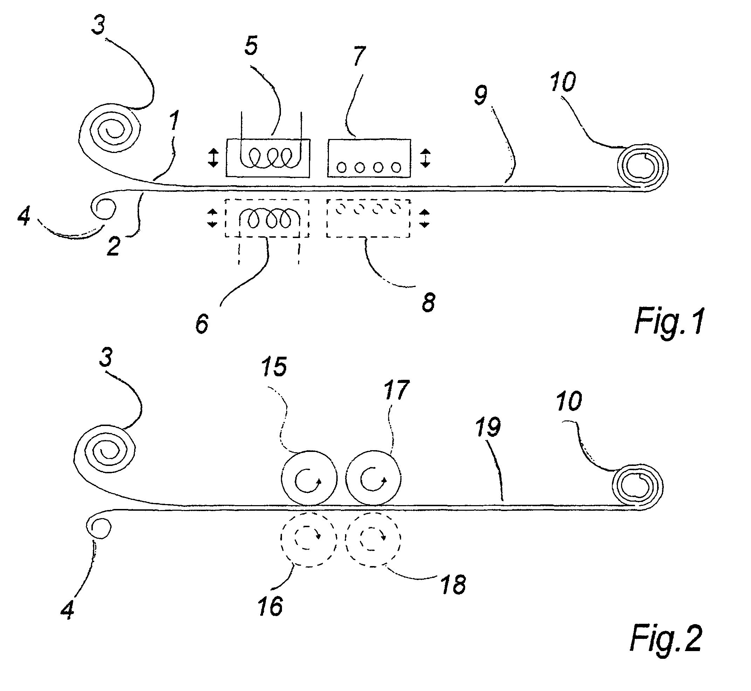

In figure 1 a schematic view is shown of a preferred automated embodiment according co the invention.

In the viewed embodiment, the shown apparatus is fed by endless webs of PTFE foil 1 and PTFE coated glass fibre fabric 2 from a roll of PTFE foil 3 and a roll of PTFE coated glass fibre fabric 4. The finished composite 9 is wound up on a roll 10.

According to the viewed embodiment the webs 1 and 2 perform a relative movement relative to the apparatus and the rollers 3, 4 and 10 are rotated by not shown forwarding means in an intermittent movement in between two co-operating heated pressure surfaces 5 and 6. These pressure surfaces 5, 6 are in the shown embodiment connected to not shown hydraulic pressure- and movement means and adapted to perform a relative movement to and from the two webs 1 and 2.

The above stepwise movement in the longitudinal direction essentially corresponds to the pressure surfaces 5, 6.

When the stepwise movement has fed two new partial lengths of foil 1 and glass fabric 2 in between the pressure surfaces 5, 6, the pressure plates 5, 6 will move against the webs and perform a combined pressure and heat treatment so that the foil 1 and the glass fabric is joined together in a lamination.

According to the viewed embodiment, the foil and the glass fabric is heated to a temperature of 380°C - 400°C under a pressure of 0.1-20 N/mm².

When the lamination is completed the pressure surfaces 5, 6 are moved away from each other and the now laminated composite is moved in an intermittent movement in between two co-operating cooling means.

The cooling means will over a time period of 20 - 120 seconds cool the composite to a temperature of 50°C and applying a pressure of 0.1 - 20 N/mm².

When the lamination of the partial length is completed the pressure surfaces are moved apart and the composite web is rolled up on a roll.

It is understood that the above described process is a continuous process where a cooling of a partial length is carried out simultaneous with the heating of the preceding partial length.

It is moreover understood that the different process parameters can be adjusted and optimised to the properties and thickness of the chosen materials.

It is likewise understood that the composite also could be applied a multiple of lamination and glass fibre fabric layers until the wanted thickness and the wanted material properties are achieved.

In fig. 2 a further embodiment of the invention is shown.

In the shown embodiment the apparatus is fed by endless webs of PTFE foil 1 and a PTFE coated glass fibre fabric 2 from a roll of PTFE foil 3 and a roll of PTFE coated glass fibre fabric 4. The finished composite 9 is wound up on a roll 10.

According to the shown embodiment the webs 1 and 2 perform a relative movement relative to the apparatus and the rollers 3, 4 and 10, that are rotated by means of not shown forwarding means in a continuous movement in between two co-operating heated pressure surfaces in the shape of rollers 15 and 16. These rollers 15, 16 are in the viewed embodiment connected to not shown pressure means.

When the continuous movement has fed the two new partial lengths of the foil 1 and the glass fabric 2 in between the pressure rollers 15, 16, the pressure rollers are moved relative to the webs and apply a combined pressure and heat impact so that the foil 1 and the glass fibre fabric are joint together in a lamination in a continuous movement.

When the relevant part of webs have been moved away of the rollers they are laminated and are forwarded in between two co-operating pressure surfaces 7, 8 that are provided with cooling means.

The cooling means will over a time period of e.g. 0.1 seconds cool the composite to a temperature of 50°C whilst under pressure.

The composite is finally wound up on the roll 10.

It can be mentioned, that the corresponding pressure surface arrangement displayed in dotted lines could be omitted.

## Claims

1. A method of manufacture of a composite product comprising at least two different layers being at least one layer of reinforced woven material and at least one layer of PTFE foil or ePTFE foil, where the foil or foils are laminated together with the layer or layers of woven material under the use of heating and pressurising,
**characterised in that** the composite material subsequently is cooled in a fully or partly fixed state and where the cooling is carried out over a period of time of 0.1 to 240 seconds from a temperature of 300 to. 420 °C, preferably 20 to 120 seconds from a temperature of 380 to 400 °C, to a temperature of 50 °C.

2. A method according to claim 1, **characterised in that** the composite material is subject to a tension during the cooling.

3. A method according to claim 1 or 2, **characterised in that** the composite material undergoes a combined cooling and pressure operation by means for pressure application.

4. A method according to claims 1-3, **characterised in that** the means for pressure supply is provided with cooling means.

5. A method according to claims 1-4, **characterised in that** the pressure supply is provided continuously by means for pressure supply comprising at least one roller.

6. A method according to claims 1-4, **characterised in that** the pressure supply is provided intermittently by means for pressure supply comprising a pressure surface.

7. A method according to claims 1-6, **characterised in that** the composite material is cooled under a substantively uniform pressure over the surface by a cooling surface.

8. A composite product manufactured according to the claims 1-7, **characterised in that** the product comprises at least two different layers being at least one foil layer of PTFE or ePTFE foil and at least one layer of reinforcing woven material.

9. A composite product according to claim 8, **characterised in that** the reinforcing woven material consists at least partly of glass fibre fabric or PTFE coated glass fibre fabric.

10. An apparatus for manufacture of a composite material according to claims 1-7, said composite comprising at least two different layers being at least one layer of reinforcing woven material and at least one layer of PTFE foil or ePTFE foil, where the foil or foils are laminated together with the layer or layers of woven material under the use of heating and pressurising, as the apparatus comprises means for lamination of the composite material by a combined pressure and heat supply,
**characterised in that** the apparatus further comprises means for fixation of the uncooled or at least only partly cooled composite material and with said means co-operating controllable cooling means.

11. An apparatus according to claim 10, **characterised in that** the means of the apparatus for fixation and the associated controllable cooling means comprises at least one pressure surface including integrated cooling means.

12. An apparatus according to claim 10, **characterised in that** the means of the apparatus for fixation and the associated controllable cooling means comprises at least one roller haying integrated cooling means.

## Patentansprüche

1. Verfahren zur Herstellung eines Verbundprodukts, das wenigstens zwei verschiedene Schichten umfasst, die wenigstens eine Schicht aus verstärktem gewobenen Material und wenigstens eine Schicht aus PTFE-Folie oder ePTFE-Folie sind, wobei die Folie oder Folien mit der Schicht oder den Schichten aus gewobenem Material unter der Anwendung von Erhitzung und Druckbeaufschlagung zusammen laminiert werden,
**dadurch gekennzeichnet, dass** das Verbundmaterial nachfolgend in einem ganz oder teilweise fixierten Zustand abgekühlt wird und wobei die Abkühlung über einen Zeitraum von 0,1 bis 240 Sekunden von einer Temperatur von 300 bis 420°C, vorzugsweise über 20 bis 120 Sekunden von einer Temperatur von 380 bis 400°C, auf eine Temperatur von 50°C durchgeführt wird.

2. Verfahren gemäß Anspruch 1, **dadurch gekennzeichnet, dass** das Verbundmaterial während des Abkühlens einer Spannung ausgesetzt ist.

3. Verfahren gemäß Anspruch 1 oder 2, **dadurch gekennzeichnet, dass** das Verbundmaterial einem kombinierten Abkühlungs- und Druckvorgang durch Vorrichtungen zur Druckanwendung unterliegt.

4. Verfahren gemäß der Ansprüche 1-3, **dadurch gekennzeichnet, dass** die Vorrichtung zur Druckanwendung mit Kühlvorrichtungen versehen ist.

5. Verfahren gemäß der Ansprüche 1-4, **dadurch gekennzeichnet, dass** die Vorrichtung zur Druckanwendung kontinuierlich durch Vorrichtungen zur Druckanwendung, die wenigstens eine Walze umfassen, bereitgestellt wird.

6. Verfahren gemäß der Ansprüche 1-4, **dadurch gekennzeichnet, dass** die Vorrichtung zur Druckanwendung intermittierend durch Vorrichtungen zur Druckanwendung, die eine Druckfläche umfassen, bereitgestellt wird.

7. Verfahren gemäß der Ansprüche 1-6, **dadurch gekennzeichnet, dass** das Verbundmaterial unter einem im wesentlichen gleichmäßigen Druck über die Oberfläche durch eine Kühlfläche abgekühlt wird.

8. Verbundmaterial, hergestellt gemäß der Ansprüche 1-7, **dadurch gekennzeichnet, dass** das Produkt wenigstens zwei verschiedene Schichten umfasst, die wenigstens eine Schicht aus PTFE- oder ePTFE-Folie und wenigstens eine Schicht aus verstärkendem gewobenen Material sind.

9. Verbundmaterial, hergestellt gemäß Anspruch 8, **dadurch gekennzeichnet, dass** das verstärkende gewobene Material wenigstens teilweise aus Glasfasergewebe oder PTFEbeschichtetem Glasfasergewebe besteht.

10. Vorrichtung zum Herstellen eines Verbundmaterials gemäß der Ansprüche 1-7, wobei der Verbundwerkstoff wenigstens zwei verschiedene Schichten umfasst, die wenigstens eine Schicht aus verstärkendem gewobenen Material und wenigstens eine Schicht aus PTFE-Folie oder ePTFE-Folie sind, wobei die Folie oder Folien mit der Schicht oder den Schichten aus gewobenem Material unter der Anwendung von Erhitzung und Druckbeaufschlagung zusammen laminiert werden, da das Gerät eine Einrichtung zur Laminierung des Verbundmaterials durch eine kombinierte Druck- und Hitzezuführung umfasst,
**dadurch gekennzeichnet, dass** das Gerät des weiteren eine Einrichtung zur Fixierung des ungekühlten oder wenigstens nur teilweise gekühlten Verbundmaterials umfasst und wobei diese Einrichtung mit einer kontrollierbaren Kühleinrichtung zusammenwirkt.

11. Vorrichtung gemäß Anspruch 10, **dadurch gekennzeichnet, dass** die Einrichtung der Vorrichtung zur Fixierung und die zugehörige kontrollierbare Kühleinrichtung wenigstens eine Druckfläche umfasst, die eine eingebaute Kühleinrichtung einschließt.

12. Vorrichtung gemäß Anspruch 10, **dadurch gekennzeichnet, dass** die Einrichtung der Vorrichtung zur Fixierung und die zugehörige kontrollierbare Kühleinrichtung wenigstens eine Walze mit einer eingebauten Kühleinrichtung umfasst.

## Revendications

1. Procédé de fabrication d'un produit composite comprenant au moins deux couches différentes se composant d'au moins une couche d'un matériau tissé renforcé et d'au moins une couche de feuille de PTFE ou de feuille de ePTFE, dans lequel la ou les feuilles sont stratifiées en même temps que la ou les couches de matériau tissé par application d'un chauffage et d'une pression,
**caractérisé en ce que** le matériau composite est ensuite refroidi dans un état partiellement ou totalement solidifié et dans lequel le refroidissement est réalisé sur une durée de 0,1 à 240 secondes à partir d'une température de 300 à 420 °C, de préférence sur une durée de 20 à 120 secondes à partir d'une température de 380 à 400 °C, jusqu'à atteindre une température de 50 °C.

2. Procédé selon la revendication 1, **caractérisé en ce que** le matériau composite est soumis à une tension pendant le refroidissement.

3. Procédé selon la revendication 1 ou 2, **caractérisé en ce que** le matériau composite subit une opération combinée de refroidissement et de pression par des moyens d'application de pression.

4. Procédé selon les revendications 1 à 3, **caractérisé en ce que** les moyens d'apport de pression sont pourvus de moyens de refroidissement.

5. Procédé selon les revendications 1 à 4, **caractérisé en ce que** l'apport de pression est fourni de façon continue par des moyens d'apport de pression comprenant au moins un rouleau.

6. Procédé selon les revendications 1 à 4, **caractérisé en ce que** l'apport de pression est délivré de façon intermittente par des moyens d'apport de pression comprenant une surface de pression.

7. Procédé selon les revendications 1 à 6, **caractérisé en ce que** le matériau composite est refroidi, sous une pression sensiblement uniforme sur la surface, par une surface de refroidissement.

8. Produit composite fabriqué selon les revendications 1 à 7, **caractérisé en ce que** le produit comprend au moins deux couches différentes se composant d'au moins une couche de feuille de PTFE ou de ePTFE et d'au moins une couche d'un matériau tissé de renforcement.

9. Produit composite selon la revendication 8, **caractérisé en ce que** le matériau tissé de renforcement se compose au moins en partie d'un tissu en fibre de verre ou d'un tissu en fibre de verre enduit de PTFE.

10. Appareil pour la fabrication d'un matériau composite selon les revendications 1 à 7, ledit composite comprenant au moins deux couches différentes se composant d'au moins une couche d'un matériau tissé de renforcement et d'au moins une couche de feuille de PTFE ou de feuille de ePTFE, dans lequel la ou les feuilles sont stratifiées en même temps que la ou les couches de matériau tissé par application d'un chauffage et d'une pression, l'appareil comprenant des moyens permettant la stratification du matériau composite par un apport combiné de pression et de chaleur,
**caractérisé en ce que** l'appareil comprend en outre des moyens de solidification du matériau composite non refroidi, ou au moins refroidi seulement partiellement, et des moyens de refroidissement réglables coopérant avec lesdits moyens de solidification.

11. Appareil selon la revendication 10, **caractérisé en ce que** les moyens de solidification de l'appareil et les moyens de refroidissement réglables associés comprennent au moins une surface de pression comprenant des moyens de refroidissement intégrés.

12. Appareil selon la revendication 10, **caractérisé en ce que** les moyens de solidification de l'appareil et les moyens de refroidissement réglables associés comprennent au moins un rouleau ayant des moyens de refroidissement intégrés.
